# EUROPEAN PATENT APPLICATION

(11) **EP 3 391 964 A1**
(43) Date of publication of application: **24.10.2018**
(21) Application number: 17204860.5
(22) Date of filing: 01.12.2017
(51) Int. Cl.: B01J 29/76, B01D 53/94

(54) **CATALYST AND METHOD FOR PREPARING THE SAME**

(30) Priority: 20.04.2017 KR 20170051108
(71) Applicant: Hyundai Motor Company, Seoul 137-938 (KR); Kia Motors Corporation, Seoul (KR)
(72) Inventor: KIM, Pyung Soon, 18280 Gyeonggi-do (KR); KIM, Youngjin, 18280 Gyeonggi-do (KR); KIM, Chang Hwan, 18280 Gyeonggi-do (KR)
(74) Representative: Viering, Jentschura & Partner mbB Patent- und Rechtsanwälte

(57) **Abstract**

One form of the present disclosure provides a catalyst including: an LTA zeolite containing copper ions; and an additive, wherein a Si/Al molar ratio of the LTA zeolite is in a range of approximately 2 to 50.

## Description

### CROSS-REFERENCE TO RELATED APPLICATION

This application claims priority to and the benefit of Korean Patent Application No. 10-2017-0051108, filed on April 20, 2017, which is incorporated herein by reference in its entirety.

### FIELD

The present disclosure relates to a catalyst and a method for preparing the same.

### BACKGROUND

The statements in this section merely provide background information related to the present disclosure and may not constitute prior art.

In general, exhaust gas of diesel vehicles contain harmful materials such as carbon monoxide, hydrocarbons, and nitrogen oxides (NOₓ). Nitrogen oxides cause environmental problems, such as photochemical smog and acid rain, as well as human diseases.

Selective catalytic reduction (SCR) is the most effective means for removing nitrogen oxides. This method incorporates a reducing agent such as ammonia (NH₃), urea, hydrocarbons (HC), and the like, and various catalysts. Ammonia (NH₃) has been known to be effective in removing nitrogen oxides from a fixed object such as a power plant and an incinerator. However, due to its hazardous nature, ammonia is difficult to store, transport, and use. Thus, when dealing with moving objects, such as a vehicle, urea has been known to be effective as it is capable of being easily decomposed to ammonia by heat decomposition and a hydration reaction.

Meanwhile, zeolite-based catalysts, such as copper (Cu)/zeolite having excellent functions, have been developed as SCR catalysts.

In particular, high temperature activity of such catalysts is very important in treatment of high-temperature exhaust gas. However, when a catalyst with improved high temperature activity is prepared, low temperature activity thereof may deteriorate.

The above information disclosed in this Background section is only for enhancement of understanding of the background of the present disclosure and therefore it may contain information that does not form the prior art that is already known in this country to a person of ordinary skill in the art.

### SUMMARY

The present disclosure provides a catalyst and a method for preparing the same that may improve high and low temperature performance thereof.

One form of the present disclosure provides a catalyst including an LTA zeolite containing copper ions and an additive, wherein a Si/AI molar ratio of the LTA zeolite is in a range of approximately 2 to 50.

The additive may include at least one of Na, Li, Ba, Ca, and Sr, and a molar ratio of the additive and aluminum may be in a range of approximately 0.1 to 0.3.

The additive may include at least one of La, Ce, Zr, Sc, and In, and a molar ratio of the additive and aluminum may be in a range of approximately 0.01 to 0.05.

One form of the present disclosure provides a method for preparing a catalyst, including: preparing an LTA zeolite with a Si/Al molar ratio of 2 or more; preparing an LTA zeolite containing ions by using the LTA zeolite; preparing an LTA zeolite containing an additive by adding the LTA zeolite containing the ions to a solution containing the additive and then stirring them; and preparing a copper type of LTA zeolite by performing copper ion exchange with respect to the LTA zeolite containing the additive.

The solution containing the additive may be a nitrate or hydroxide solution containing at least one ion selected from Na, Li, Ba, Ca, Sr, La, Ce, Zr, Sc, and In.

The additive may include at least one of Na, Li, Ba, Ca, and Sr, and a molar ratio of the additive and aluminum of the copper type of LTA zeolite may be in a range of approximately 0.1 to 0.3.

The additive may include at least one of La, Ce, Zr, Sc, and In, and a molar ratio of the additive and aluminum of the copper type of LTA zeolite may be in a range of approximately 0.01 to 0.05.

In one form of the present disclosure, it is possible to improve both high temperature performance and low temperature performance by including an additive in an LTA zeolite catalyst.

Further areas of applicability will become apparent from the description provided herein. It should be understood that the description and specific examples are intended for purposes of illustration only and are not intended to limit the scope of the present disclosure.

### DRAWINGS

In order that the disclosure may be well understood, there will now be described various forms thereof, given by way of example, reference being made to the accompanying drawings, in which:
FIG. 1 is a graph illustrating NOx conversion rates with respect to a fresh state and an aging temperature of a copper type of LTA zeolite catalyst and a copper type of SSZ-13 catalyst;
FIG. 2 is a graph illustrating the comparison of the performances of a copper type of LTA zeolite catalyst and a copper type of SSZ-13 zeolite catalyst;
FIG. 3 is a graph illustrating NOx conversion rates of a catalyst of Experimental Example 1 after being aged in fresh and hydrothermal states;
FIG. 4 is a graph illustrating NOx conversion rates of a catalyst with respect to copper contents of Experimental Example 2; and
FIG. 5 to FIG. 7 are graphs illustrating NOx conversion rates with respect to respective additives added to Experimental Example 3.

The drawings described herein are for illustration purposes only and are not intended to limit the scope of the present disclosure in any way.

### DETAILED DESCRIPTION

The following description is merely exemplary in nature and is not intended to limit the present disclosure, application, or uses. It should be understood that throughout the drawings, corresponding reference numerals indicate like or corresponding parts and features.

In the drawings, the thickness of layers, films, panels, regions, etc., are exaggerated for clarity. It will be understood that when an element such as a layer, film, region, or substrate is referred to as being "on" another element, it can be directly on the other element or have other intervening elements. In contrast, when an element is referred to as being "directly on" another element, there are no intervening elements present.

In one form of the present disclosure, the catalyst includes an LTA zeolite containing copper ions, wherein a Si/AI molar ratio of the LTA zeolite is in a range of approximately 2 to 50, and includes an additive.

The additive may be an alkali or alkaline earth metal. In this case, the alkali or alkaline earth metal may include at least one selected from Na, Li, Ba, Ca, and Sr. Alternatively, the additive may be at least one selected from La, Ce, Zr, Sc, and In. When the additive is included, catalyst performance may be improved at a low temperature.

When the additive is the alkali or alkaline earth metal, a molar ratio of the additive to aluminum may be in a range of approximately 0.1 to 0.3. When the additive is at least one selected from La, Ce, Zr, Sc, and In, the molar ratio of the additive to the aluminum may be in a range of approximately 0.01 to 0.05.

In the catalyst of one form of the disclosure, a molar ratio of Si/AI of the LTA zeolite is in a range of approximately 2 to 50. When the Si/AI molar ratio is less than 2, hydrothermal stability may be poor, and when the Si/AI molar ratio is more than 50, the catalyst performance is low because there are few aluminum sites that can contain Cu.

The copper type of LTA zeolite catalyst containing the additive according to one form of the present disclosure has excellent low and high temperature performance.

That is, the copper type of LTA zeolite catalyst of which the Si/AI molar ratio is in the range of approximately 2 to 50 according to one form of the present disclosure is thermally stable at 750 °C compared to a conventional copper type of SSZ-13 catalyst. Particularly, NOx purification performance of the copper type of LTA catalyst is superior to that of the copper type of SSZ-13 catalyst at a high temperature of 350 °C or higher after aging. However, in the fresh state not being aged, the low temperature performance thereof at 350 °C or lower is not good compared to the high temperature performance thereof. Accordingly, it is desired to improve this, and it may be improved by including the additive as in one form of the present disclosure.

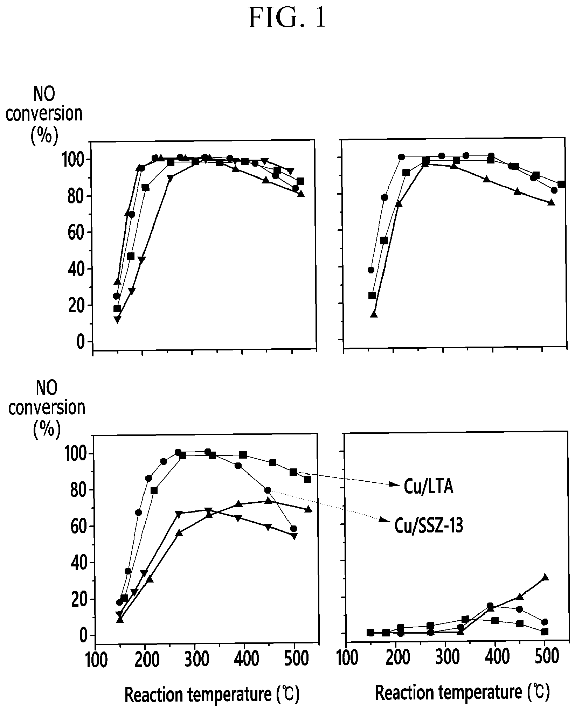

FIG. 1 illustrates NOx conversion rates with respect to a fresh state and an aging temperature of a copper type of LTA zeolite catalyst and a copper type of SSZ-13 catalyst. That is, with respect to a copper type of LTA zeolite (■) having the Si/AI molar ratio of 16, a copper type of SSZ-13 zeolite (●) having the Si/Al molar ratio of 16, a copper type of ZSM-5 zeolite (▲) having the Si/Al molar ratio of 14, and a copper type of PST-7 zeolite (▼) having the Si/Al molar ratio of 11, the graph illustrates the NOx conversion rates (a) in a fresh state, (b) in a state of being aged at 650 degrees Celsius, (c) in a state of being aged at 750 degrees Celsius, and (d) in a state of being aged at 650 degrees Celsius.

Referring to FIG. 1, when comparing the copper type of LTA zeolite (■) having the Si/Al molar ratio of 16 and the copper type of SSZ-13 zeolite (●) having the Si/Al molar ratio of 16, high temperature performance of the copper type of LTA zeolite (■) having the Si/Al molar ratio of 16 is superior or equivalent to that of the copper type of SSZ-13 zeolite (●) having the Si/Al molar ratio of 16. In contrast, at 350 degrees Celsius or less, performance of the copper type of SSZ-13 zeolite (●) having the Si/Al molar ratio of 16 is superior to that of the copper type of LTA zeolite (■) having the Si/Al molar ratio of 16.

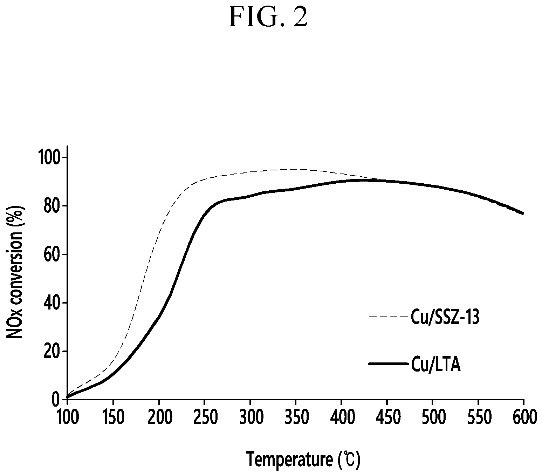

FIG. 2 compares only the performances of a copper type of LTA zeolite catalyst and a copper type of SSZ-13 zeolite catalyst. FIG. 2 shows that NOx conversion performance of the copper type of LTA zeolite is reduced at a low temperature of about 350 degrees Celsius or less.

However, since the copper type of LTA zeolite catalyst contains at least one additive selected from an alkali metal, an alkaline earth metal, La, Ce, Zr, Sc, and In, the performance at a low temperature may also be improved.

This is because materials of the additive improve NO oxidation and adsorption performance and NH₃ adsorption performance.

Specifically, when the alkali metal or the alkaline earth metal is added, the low temperature performance at 300 degrees Celsius or less is improved. Particularly, when Na, Li, or Ba is added, the low temperature performance is increased by about 10 to 30 % or more.

In addition, when La-based materials (La and Ce) are added, the low temperature performance is increased by about 15 %.

Now, effects of the LTA zeolite catalyst containing the additive will be described through the following experimental examples.

### Experimental Example 1: Measurement of NOx conversion rate

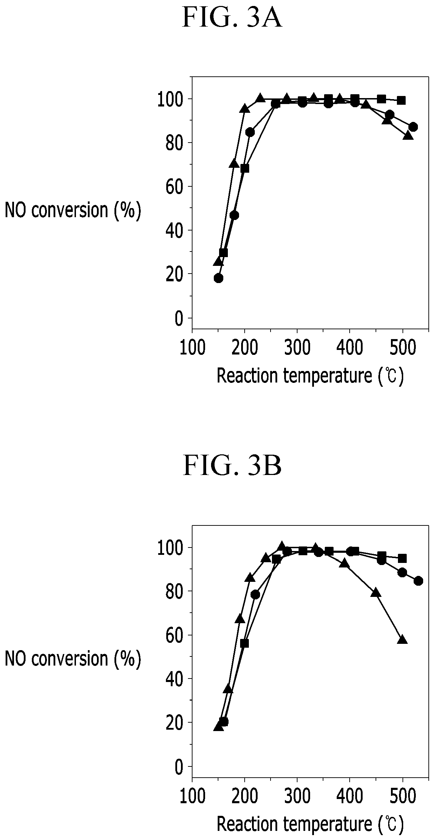

FIG. 3 shows the NOx conversion rates of the copper type of LTA zeolite (■) having the Si/Al molar ratio of 11, the copper type of LTA zeolite (●) having the Si/Al molar ratio of 16, and the copper type of SSZ-13 zeolite (▲) having the Si/Al molar ratio of 16 are measured according to temperatures. FIG. 3A shows the NOx conversion rates measured in the fresh state, and FIG. 3B shows the NOx conversion rates measured after being aged at 750 degrees Celsius.

To measure the conversion rates, the removal rate of NO was measured while changing the temperature between 150 and 550 degrees Celsius and supplying N₂ at a gas hourly space velocity (GHSV) of 100,000 to the catalyst in a state of NO of 500 ppm, NH₃ of 500 ppm, oxygen of 5 %, and humidity of 10 %. This was equally applied to the following other experimental examples.

Referring to (a) and (b) of FIG. 3, it can be seen that the LTA catalyst according to one form of the present disclosure has excellent NOx conversion rates even before being hydrothermal-aged, as well as at the high temperature after being hydrothermal-aged at 750 degrees Celsius.

### Experimental Example 2: LTA zeolite catalyst having copper content of 2 wt% and Si/AI molar ratio of 23

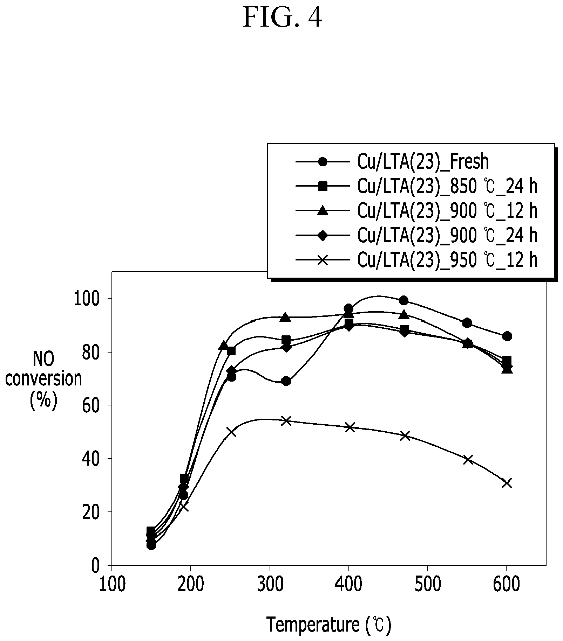

When copper ions were exchanged in the LTA zeolite catalyst having the Si/Al molar ratio of 23, the copper content was adjusted to 2 %wt. FIG. 4 illustrates the NOx conversion performances after such a catalyst is hydrothermal-aged at various temperature and time conditions Referring to FIG. 4, it can be seen that even when the hydrothermal-aging process was performed for 24 hours at 900 degrees Celsius, the excellent NOx conversion performance was maintained at 50 % or more.

### Experimental Example 3: Catalyst-containing additive

The LTA zeolite was prepared as follows. First, 2 g of the H form of LTA zeolite was added to and mixed with a solution of 100 ml of 1 M ammonium nitrate (hereinafter referred to as NH₄NO₃) in a 250 ml two-neck flask, and then the mixture was refluxed at 80 °C for about 6 hours. Next, the mixture was repeatedly cleansed with a filter and distilled water, and then dried at room temperature. Subsequently, the dried NH₄ form of zeolite was added to a nitrate or hydroxide solution containing 100 ml of 0.1 M (Na, Li, Ba, Ca, Sr, La, Ce, Zr, Sc, or In) ions in a 250 ml beaker, stirred at room temperature for 6 hours, repeatedly cleansed with the filter and the distilled water, and then dried at room temperature. Next, the dried (Na, Li, Ba, Ca, Sr, La, Ce, Zr, Sc, or In)/LTA was added to a solution of 100 ml of 0.01 M copper acetate monohydrate (hereinafter referred to as Cu(OAc)₂H₂O) in the 250 ml beaker, stirred at room temperature for 6 hours, repeatedly cleansed with the filter and the distilled water, and then dried at room temperature. Finally, the dried (Cu + the additive)/LTA was heated to 550 °C at 2 °C/min in a baking oven, and then fired for 5 hours.

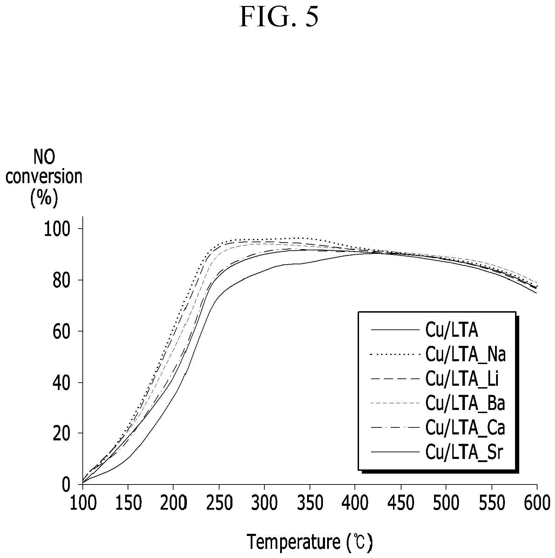

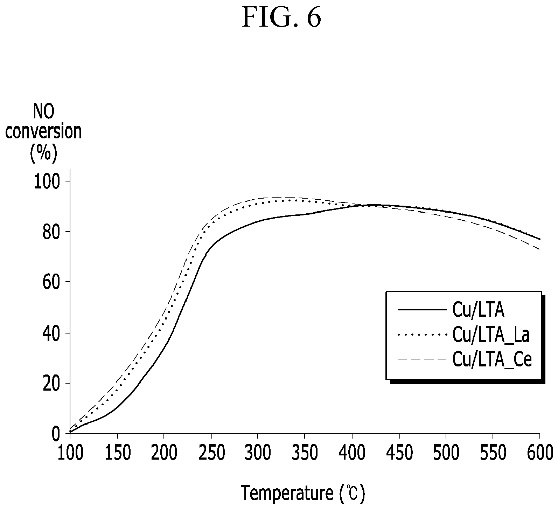

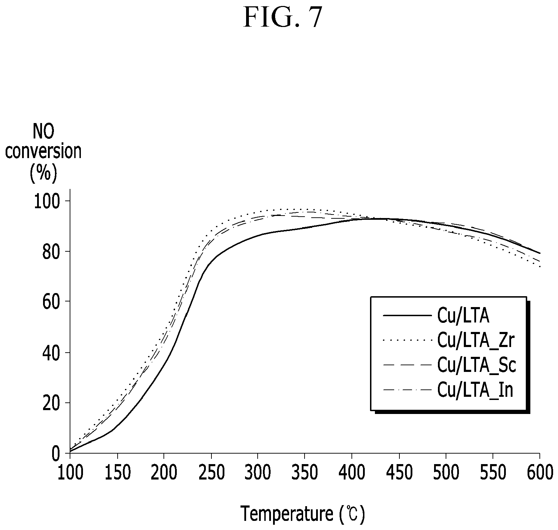

FIG. 5 to FIG. 7 shows the NOx conversion rates of the LTA zeolite catalyst having the Si/Al molar ratio of 16, measured according to respective additives. FIG. 5 shows the result of adding the alkali metal or the alkaline earth metal as an additive. FIG. 6 shows the result of adding the La-based metal as an additive. FIG. 7 shows the result of adding Zr, Sc, or In as an additive. Referring to FIG. 5 to FIG. 7, when various additives are added, the NOx conversion performance at the low temperature was improved without significantly affecting the NOx conversion performance at the high temperature.

A method for preparing the catalyst includes: preparing an LTA zeolite with a Si/Al molar ratio of approximately 2 or more; preparing an LTA zeolite containing ions by using the LTA zeolite; preparing an LTA zeolite containing an additive by adding the LTA zeolite containing the ions to a solution containing the additive and then stirring them; and preparing a copper type of LTA zeolite by performing copper ion exchange with respect to the LTA zeolite containing the additive.

The LTA zeolite may be prepared with a seed, or without it. In the preparing of the LTA zeolite with the Si/Al molar ratio of approximately 2 or more, the Si/Al molar ratio of the LTA zeolite may exceed 1. In some implementations, the Si/Al molar ratio may be in a range of approximately 2 to 50. In one variation, the Si/Al molar ratio may be in a range of approximately 5 to 30. In another variation, the Si/Al molar ratio may be approximately 8 or more.

For preparing the LTA zeolite with the seed, first, an LTA seed is mixed with a mixture of aluminum hydroxide (Al(OH)₃) and tetraethyl orthosilicate (Si(OC₂H₅)).

Specifically, a (1,2-dimethyl-3-(4-methylbenzyl)imidazolium hydroxide) solution and an aluminum hydroxide (Al(OH)₃) solution are mixed and primarily stirred, and tetramethylammonium hydroxide pentahydrate is additionally mixed and secondarily stirred to prepare a first mixture.

Here, the first mixture may be prepared by mixing the following with respect to the total weight of the first mixture: 20∼35 wt% of 1,2-dimethyl-3-(4-methylbenzyl)imidazolium hydroxide, 1∼2 wt% of aluminum hydroxide (Al(OH)₃), 1∼5 wt% of tetramethylammonium hydroxide pentahydrate, and a residual quantity of water. The primary stirring and the secondary stirring may be respectively performed for about 0.5 to 1.5 hours.

Tetraethyl orthosilicate (TEOS) (Si(OC₂H₅)₄) is mixed into the first mixture and thirdly stirred. The LTA seed is mixed thereinto and fourthly stirred to prepare a second mixture.

30∼35 wt% of tetraethyl orthosilicate (TEOS) may be mixed with respect to the total weight of the second mixture, and the amount of LTA seed may be 2∼6 wt% with respect to the total weight of the entire silicon included in the LTA zeolite.

The third stirring may be performed for about 2 to 4 hours, and the fourth stirring may be performed for about 20 to 28 hours.

Next, the second mixture is sufficiently heated to cause hydrolysis of the TEOS, and ethanol and water generated from the hydrolysis of TEOS are evaporated such that a third mixture is prepared.

The second mixture may be heated at a temperature between 70 °C and 90 °C.

Next, a hydrofluoric aqueous solution is mixed in the third mixture, and a fourth mixture is prepared through heating, cleansing, and drying processes.

Here, the third mixture may be heated for a predetermined time at a temperature of about 150 °C to 200 °C, the cleansing process may be iteratively performed, and the drying process may be performed at room temperature.

Next, heat treatment is additionally performed to remove an organic material from the fourth mixture to prepare the LTA zeolite for the zeolite catalyst.

The heat treatment may be performed at a temperature between 500 °C and 700 °C for 6 to 10 hours, and the Si/Al molar ratio of the LTA zeolite may be in a range of approximately 2 to 50..

When the LTA zeolite is prepared with the seed, it may be prepared in the following method. 0.0∼0.2 mol of the aluminum hydroxide and 0.0∼0.2 mol of tetramethylammonium hydroxide (hereinafter referred to as TMAOH) are added to 0.1∼1.0 mol of 1,2-dimethyl-3-(4-methylbenzyl)imidazolium hydroxide (hereinafter referred to as 12DM3(4MB)IOH) as an organic structure-derived molecule in a plastic beaker. After they are sufficiently stirred, tetraethyl orthosilicate (TEOS) is added to the reacted materials so that a mole ratio of the TEOS to the reacted materials is 1. The mixture is again sufficiently stirred.

Next, until ethanol generated from hydrolysis of the TEOS added to the solution is completely removed and water generated from the hydrolysis of the TEOS is in a range of 0∼10 mol, the solution is sufficiently heated at 60∼100 °C. Finally, when 0.1 to 1.0 mol of hydrogen fluoride (HF) is added and sufficiently mixed, a reaction mixture represented by Chemical Formula 1 is obtained.

### [Chemical Formula 1]

1 SiO₂ : 0.0 - 0.2 Al (OH)₃ : 0.0 - 0.2 TMAOH : 0.1 - 1.0 R : 0.1 - 1.0 HF : 0 - 10 H₂O.

In Chemical Formula 1, R is 12DM3(4MB)IOH.

The reaction mixture may be transferred to a Teflon reactor and then placed in a container made of stainless steel, and may be heated at 100~200 °C for 0.1~14 days to prepare the LTA zeolite. The LTA zeolite prepared by the above-described method may also have the Si/Al molar ratio of 2 to 50.

Hereinafter, the preparing of the LTA zeolite containing the ions by using the LTA zeolite will be described in detail.

First, the LTA zeolite is added to ammonium salt and refluxed, and then the mixture is cleansed and dried to be able to prepare an LTA zeolite including NH₄⁺ ions (i.e., NH₄ type of LTA zeolite).

Here, the ammonium salt may be ammonium nitrate (NH₄NO₃).

The reflux process may be performed at a temperature between 60 °C and 100 °C for 5 to 7 hours. Next, the NH₄ type of LTA zeolite is repeatedly cleansed with a filter and distilled water and then dried at room temperature.

In one form, the ions have been exemplified as ammonium ions, but the present disclosure is not limited thereto. That is, other ions and ionic salts may also be included within the scope of the present disclosure.

Hereinafter, the preparing of the LTA zeolite containing the additive by adding the LTA zeolite containing the ions to the solution containing the additive and then stirring them will be described.

In the preparing of the LTA zeolite containing the additive, the LTA zeolite containing the ions prepared in the previous step thereof may be added to a nitrate or hydroxide solution containing the additive ions, and then the mixture may be stirred at room temperature for a predetermined time. In this case, the stirring time may be approximately 5 to 7 hours.. Next, it is repeatedly cleansed with a filter and distilled water and then dried at room temperature.

The additive may be one selected from Na, Li, Ba, Ca, Sr, La, Ce, Zr, Sc, and In.

In this case, when the additive is an alkali or alkaline earth metal, the molar ratio of the additive to the aluminum may be in a range of approximately 0.1 to 0.3. When the additive is one selected from La, Ce, Zr, Sc, and In, the molar ratio of the additive to the aluminum may be in a range of approximately 0.01 to 0.05.

Hereinafter, the preparing of the copper type of LTA zeolite by performing the copper ion exchange with respect to the LTA zeolite containing the additive will be described.

For the copper ion exchange, the LTA zeolite containing the additive is added into a copper precursor solution, such as copper acetate monohydrate, copper nitride, copper nitrate, copper sulfate, and the like, and stirred. The mixture is cleansed and dried to prepare the copper type of LTA zeolite. The dried (Cu+additive)/LTA may be heated to 550 °C at 2 °C/min in a baking oven and baked for approximately 5 hours.

By including the additive in the copper type of LTA zeolite catalyst, it is possible to improve both the high temperature performance and the low temperature performance of the.

While the present disclosure has been described in connection with what is presently considered to be practical forms, it is to be understood that the present disclosure is not limited to the disclosed forms. On the contrary, it is intended to cover various modifications and equivalent arrangements included within the spirit and scope of the appended claims.

## Claims

1. A catalyst comprising:
an LTA zeolite containing copper ions; and
an additive,
wherein a Si/Al molar ratio of the LTA zeolite is in a range of approximately 2 to 50.

2. The catalyst of claim 1, wherein
the additive includes at least one of Na, Li, Ba, Ca, or Sr, and
a molar ratio of the additive and aluminum is in a range of approximately 0.1 to 0.3.

3. The catalyst of claim 1, wherein
the additive includes at least one of La, Ce, Zr, Sc, or In, and a molar ratio of the additive and aluminum is in a range of approximately 0.01 to 0.05.

4. A method for preparing a catalyst, comprising:
preparing an LTA zeolite with a Si/Al molar ratio of 2 or more;
preparing an LTA zeolite containing ions by using the LTA zeolite;
preparing an LTA zeolite containing an additive by adding the LTA zeolite containing the ions to a solution containing the additive and then stirring them; and
preparing a copper type of LTA zeolite by performing copper ion exchange with respect to the LTA zeolite containing the additive.

5. The method for preparing the catalyst of claim 4, wherein
the solution containing the additive is a nitrate or hydroxide solution containing at least one ion selected from Na, Li, Ba, Ca, Sr, La, Ce, Zr, Sc, and In.

6. The method for preparing the catalyst of claim 4, wherein
the additive includes at least one of Na, Li, Ba, Ca, or Sr, and
a molar ratio of the additive and aluminum of the copper type of LTA zeolite is in a range of approximately 0.1 to 0.3.

7. The method for preparing the catalyst of claim 4, wherein
the additive includes at least one of La, Ce, Zr, Sc, or In, and a molar ratio of the additive and aluminum of the copper type of LTA zeolite is in a range of approximately 0.01 to 0.05.
